# EUROPÄISCHE PATENTANMELDUNG

(11) **EP 2 259 084 A1**
(43) Veröffentlichungstag der Anmeldung: **08.12.2010**
(21) Anmeldenummer: 09075416.9
(22) Anmeldetag: 07.09.2009
(51) Int. Cl.: G01S 5/14

(54) **Verfahren und Funkeinrichtung zur Detektion einer Bewegung**

(30) Priorität: 03.06.2009 EP 09075254
(71) Anmelder: Fraunhofer-Gesellschaft zur Förderung der angewandten Forschung e.V., 80686 München (DE)
(72) Erfinder: Milosiu, Heinrich, 91080 Uttenreuth (DE); Oehler, Frank, 91325 Adelsdorf (DE); Sauerer, Josef, 91074 Herzogenaurach (DE)
(74) Vertreter: Pfenning, Meinig & Partner GbR

(57) **Zusammenfassung**

Es wird ein Verfahren und eine Funkeinrichtung zur Detektion einer Bewegung mindestens eines Empfängers vorgeschlagen, bei dem Funksignale von mindestens einem ortsfesten Sender an den mindestens einen Empfänger gesendet und die empfangenen Signale zur Feststellung einer Bewegung ausgewertet werden. Die Funksignale sind als eine auf einen hochfrequenten Träger aufmodulierte vorgegebene Bitsequenz ausgebildet und werden von dem Empfänger zur Bildung einer Empfangssequenz demoduliert, die zur Bestimmung von Übereinstimmungen mit der als Referenzsequenz gespeicherten vorgegebenen Bitsequenzen korreliert wird. Abhängig von durch die Korrelation feststellbaren Übereinstimmungen oder Fehlern werden Qualitätsmaße für die Empfangsfeldstärke der empfangenen Funksignale bestimmt werden, wobei die Funksignale mit vorgegebener Bitsequenz von dem Sender mit mindestens zwei unterschiedlichen Sendeleistungen in einer Folge gesendet werden. Die Folge wird in zeitlichen Abständen wiederholt und die Qualitätsmaße der Empfangssequenzen der Folgen werden zur Feststellung einer Bewegung des Empfängers in Bezug auf den Sender ausgewertet.

## Beschreibung

Die Erfindung betrifft ein Verfahren und eine Funkeinrichtung zur Detektion einer Bewegung mindestens eines stromsparenden Empfängers.

Um Aussagen über Abstände bzw. Bewegungen in Funksystemen zu machen ist es bekannt, Empfangsfeldstärken oder davon abhängige Größen auszuwerten. Zur Ermittlung einer Position eines mobilen Funkknotens, beispielsweise in einer Ebene, sind mehrere, beispielhaft mindestens drei Abstandsschätzungen erforderlich.

Weiterhin sind Lokalisierungsverfahren auf der Basis der sogenannten Zigbee-Technologie von Texas Instruments bekannt. Die verwendeten integrierten Funkempfänger (z.B. CC2420) weisen jedoch einen so hohen Stromverbrauch auf, dass ein Betrieb mit Knopfzellen auf weniger als einen Tag beschränkt ist.

In integrierten Funkempfängern ist es verbreitet, die Qualität des Empfangssignals als so genanntes RSSI-Signal (Received Signal Strength Indicator) für den Anwender bereitzustellen. Dabei wird meist eine analoge Spannung erzeugt, die dem logarithmischen Pegelmaß der Amplitude des hochfrequenten empfangenen Trägersignals entspricht. Die Erzeugung eines solchen RSSI-Signals wird mit einer Kaskade von logarithmischen Verstärkerzellen durchgeführt, deren Einzelkennlinien sich zur Gesamtkennlinie mit größerer Eingangspegeldynamik zusammensetzen. Um das RSSI-Signal zu erzeugen, wird der hochfrequente Empfangsteil des Funkempfängers eingeschaltet. Der Strombedarf von analogen RSSI-Schaltungen, die ein Signal für die Qualität des Empfangssignals zur Verfügung stellen, lässt einen jahrelangen Betrieb mit Knopfzellenbatterien nicht zu. Im Handel werden eine Reihe von logarithmischen Verstärkern als einzelne ICs für verschiedene Frequenzbereiche angeboten, wobei der sparsamste IC, der bis 2,7 GHz arbeitet und Eingangspegel zwischen -21 dBm und +5 dBm erlaubt, mit einem Stromverbrauch von 1,1 mA angegeben wird. Die Betriebsdauer eines Funkempfängers mit solchen RSSI-Komponenten ist für einen Knopfzellenbetrieb der Kapazität 210 mAh auf unter 8 Tage beschränkt. Der relativ hohe Stromverbrauch schließt somit energiesparende, batteriebetriebene Anwendungen zunächst aus, es sei denn es werden Abschaltkonzepte, wie Polling eingesetzt.

In Funkknotennetzen, auch Sensorknotennetze genannt, die auf Standard-Transceivern basieren, wird das so genannte Polling verwendet, um Strom zu sparen. Dabei werden die Empfänger nur zu bestimmten Zeitpunkten für eine kurze Zeit aktiviert. In dieser Zeit wird die Kommunikation abgewickelt, danach wird der Empfänger wieder ausgeschaltet. Damit ist der Empfänger die meiste Zeit nicht aktiv und somit für eine Funkverbindung nicht erreichbar. Es kommt zur Erhöhung der Reaktionszeit bzw. zu unerwünschten Latenzzeiten. Das führt z.B. dazu, dass längere Zeit gesendet werden muss, bis der im Polling betriebene Funkempfänger die Nachricht empfangen hat. Eine mitunter ständige Belegung des Funkkanals kann die Folge sein. Um Betriebsdauern in der Größenordnung von einem Jahr erreichen zu können, muss ein solcher Empfänger eines Standard-Transceivers eine Minute lang ausgeschaltet bleiben, um danach kurz, d.h. in der Größenordnung <0,1 s eingeschaltet zu werden, wobei dies für einen durchschnittlichen Strom von ca. 28 µA gilt.

Wie schon angeführt, liegt der Stromverbrauch von PLL-basierten Standardfunkempfängern, die ein RSSI-Signal bereitstellen, oberhalb von 10 mA. Solche Empfänger können dennoch mit dem Polling-Verfahren batteriebetrieben angewendet werden, allerdings werden in drahtlosen Netzwerken, die mit Polling arbeiten, mit abnehmenden Dutycycle gleichermaßen die Reaktionszeit eines Funkknotens erhöht, was wiederum für viele Anwendungen nicht tolerierbar ist.

Stromsparende Empfänger lassen sich beispielsweise als Superregenerativ- oder Detektor-Empfänger realisieren. Die erzielbaren Stromaufnahmen liegen bei etwa 100 µA. Um den Stromverbrauch niedrig zu halten, weist der stromsparende Empfänger moderate bis niedrige Empfindlichkeiten und reduzierte Selektivität auf. Die Nachteile von erhöhten Latenz- bzw. Reaktionszeiten bei Polling-Verfahren können hierbei entfallen, wenn ein Dauerbetrieb eines solchen stromsparenden Funkempfängers in der Anwendung möglich ist. Solche stromsparenden Empfänger werden üblicherweise als Aufweckempfänger in den Funkknotennetzen verwendet, der bei Empfang auf einer speziellen Aktivierungssequenz das restliche angeschlossene und im stromsparenden Modus (z.B. Schlafmodus) betriebene System aufweckt. Wird für die Stromversorgung eines solchen Aufweckempfängers eine Lithiumknopfzelle mit 1000 mAh verwendet, so kann ein 100 µA-Empfänger 14 Monate dauernd eingeschaltet betrieben werden.

Der Erfindung liegt daher die Aufgabe zugrunde, ein Verfahren und eine Funkeinrichtung zur stromsparenden Detektion einer Bewegung mindestens eines stromsparenden Empfängers zu schaffen, mit denen eine signifikante Bewegung des Empfängers bzw. eines diesen enthaltenden mobilen Funkknoten auch über einen langen Zeitraum in relativ einfacher Weise ohne aufwändige Rechenarbeit detektiert werden kann.

Diese Aufgabe wird erfindungsgemäß durch die Merkmale jeweils der unabhängigen Ansprüche gelöst.

Durch die in den Unteransprüchen angegebenen Maßnahmen sind vorteilhafte Weiterbildungen und Verbesserungen möglich.

Dadurch, dass bei dem Verfahren bzw. bei der Funkeinrichtung zur stromsparenden Detektion einer Bewegung mindestens eines stromsparenden Empfängers die Funksignale, die von mindestens einem Sender an den mindestens einen Empfänger gesendet werden und die als vorgegebene Bitsequenzen auf einen hochfrequenten Träger aufmoduliert sind, in eine Empfangssequenz demoduliert und dass in einer nachgeschalteten Korrelatoreinheit die Empfangssequenz mit einer Referenzsequenz, die entsprechend der vorgegebenen Bitsequenz ausgebildet ist und gespeichert ist, korreliert wird, kann abhängig von durch die Korrelation festgestellten Übereinstimmungen oder Fehler ein Qualitätsmaßsignal für die Empfangsfeldstärke am Empfänger bestimmt werden, wobei weiterhin durch Aussenden der Funksignale mit der vorgegebenen Bitsequenz mit mindestens zwei unterschiedlichen Sendeleistungen in einer Folge und Wiederholen der Folge in zeitlichen Abständen einerseits Qualitätsmaße der Empfangssequenzen abhängig von der Zeit ermittelt werden können und andererseits durch die abgestuften Sendeleistungen eine Erweiterung der Entfernungsbereiche erzielt wird, in denen das Vorhandensein von Bewegungen des Empfängers durch eine Auswertevorrichtung abhängig von den Qualitätsmaßen ermittelt werden kann.

Die Möglichkeit mit einem Wert des Qualitätsmaßes (QM-Wert) eine Bewegung innerhalb unterschiedlicher Abstandsbereiche (Abstandsklassen) zu schätzen, hängt im Wesentlichen von der Codelänge, d.h. von der Länge der vorgegebenen Bitsequenz ab. Dabei können beispielsweise bei der Variation der Werte des Qualitätsmaßes bei einer Sendeleistung x verschiedene, z.B. bei einer Bitsequenz von 32 Bit drei, mit etwas mehr Unsicherheit vier verschiedene Abstände bzw. Entfernungen des Empfängers vom Sender geschätzt werden. Bei Erhöhung der Anzahl von Sendeleistungen kann in entsprechender Weise die Anzahl der Abstandsklassen erhöht werden (z.B. <=5 m, 10 m, >=20 m), innerhalb derer eine Bewegung des Empfängers oder Funkknotens detektiert werden kann, d.h. es wird eine Erweiterung der "RSSI" Dynamik erreicht; vor allem im Nahbereich werden nur wenige Übertragungsfehler vorkommen, so dass eine "künstliche Absenkung" sinnvoll ist. Bei Verlängerung der vorgegebenen Bitsequenz z.B auf 64 Bit sind feinere Unterscheidungen möglich, z.B. 6 Abstandsklassen, wie <=3 m, 5 m, 8 m, 13 m, 20 m, >30 m. Wenn eine Abstufung von fünf Sendeleistungen vorgenommen wird, werden fünf QM-Werte erhalten und wenn die Bitsequenz auf drei Abstandsbereiche gewählt ist, so lassen sich bis zu maximal 15 Abstände schätzen. Das Maximum von 15 Abständen wird dann erreicht, wenn die Sendeleistungen an die QM-Werte angepasst werden und es zu keinen Überlappungen bei der Zuordnung QM-Werte und Sendeleistung zu Abstand kommt.

Die Auswertevorrichtung zur Feststellung einer Bewegung aus den Qualitätsmaßen kann im Empfänger integriert sein oder extern vorgesehen sein oder auch teilweise in dem Empfänger und teilweise extern angeordnet sein. Wichtig ist, dass auch die im Empfänger teilweise oder vollständig integrierte Auswertevorrichtung stromsparend ausgebildet ist. Dazu eignen sich Digitalschaltungen mit niedriger Komplexität, wie Addierer, Vergleicher oder dergleichen. Eine Auswertung in einem komplexen Signalprozessor ist nicht erforderlich. Die Auswertevorrichtung kann beispielsweise auch statisches RAM im Funkempfänger beinhalten, in dem Qualitätsmaße und/oder Bewegungs- und/oder relative Positionsdaten gespeichert sind, die bei Bedarf, z.B. über ein aktives, stromzehrendes drahtloses Sensornetzwerk ausgelesen, zentral gespeichert und ausgewertet werden. Damit kann eine Rückverfolgung von an wertvollen Gütern angebrachten Funkempfängern vorgenommen werden. Die für die Auswertung der Qualitätsmaße benötigten Baugruppen des Empfängers, wie Korrelatoreinheit, die Schieberegister und/oder XOR Gatter umfasst, weisen einen niedrigen Stromverbrauch auf, so dass ein Dauerbetrieb über sehr lange Zeit mit Batterieversorgung möglich ist. In einem bevorzugten Funksystem sind mindestens drei ortsfeste Sender, in einem Bereich in dem Bewegungen detektiert werden sollen, vorgesehen. Damit ist es möglich, auch Bewegungsrichtungen und gegebenenfalls auch relative Positionen zu erfassen. Als Beispiel für ein Anwendung eines solchen Systems kann eine Messehalle angeführt, in der etwa 4 bis 5 (oder mehr) stationäre Sender installiert sind und eine Vielzahl von an Objekten angebrachten Funkknoten mit stromsparendem Empfänger vorgesehen sind. Mit dem erfindungsgemäßen System ist eine funkgestützte Diebstahlsicherung bzw. ein Abzäunen möglich.

Vorzugsweise wird als Referenzsequenz und somit als vorgegebene Bitsequenz eine Binärsequenz gewählt, da diese einfach zu verarbeiten ist. Weiterhin ist vorteilhaft, dass die vorgegebene Bitsequenz bzw. Referenzsequenz mindestens 8 Bits umfasst. Vorzugsweise ist eine lange Bitsequenz, beispielsweise mit einer Länge von 31 Bit und größer, beispielsweise bis zu 64 Bit zu wählen, da mehr Fehler beim Empfang von Funksignalen toleriert werden können.

Zur Definition des Qualitätsmaßes, wird der Abstand des tatsächlichen Korrelationsmaximums zu einem vorgesehenen Wert gewählt. Es ist besonders vorteilhaft, zusätzlich zu dem Korrelationsmaximum den Abstand zu mindestens einem Nebenmaximum, z.B. dem höchsten zu berücksichtigen. Der vorgegebene Wert kann durch das maximal erreichbare oder das bestmögliche Korrelationsmaximum bestimmt werden. Diese Kriterien bieten eine gute Information über die Qualität der Empfangssignale, d.h. über die Empfangsfeldstärke, insbesondere bei der erfindungsgemäßen Wahl der vorgegebenen Bitsequenz bzw. der Referenzsequenz.

In einer vorteilhaften Ausführungsform korreliert die Korrelationseinheit die Empfangsbitfolge bzw. -Sequenz mit der Referenzsequenz nach einer Kreuzkorrelationsfunktion, wodurch bei ungestörtem Empfang die ermittelte Kreuzkorrelationsfunktion gleich der Autokorrelationsfunktion ist, die mit der vorgegebenen Bitsequenz festgelegt und vorab ermittelt werden kann. Der stromsparende Empfänger ist hinsichtlich seiner Demodulation so ausgelegt, dass er Funksignale, die mit einer OOK (On-Off-Keying) Modulation oder anderen mehrwertigen Amplitudenmodulationen moduliert sind, demodulieren kann. Dies führt zur stromsparenden Ausführung des Empfängers, der etwa 5 µA bis weniger als 100 µA benötigt.

Insgesamt kann gesagt werden, dass die Zahl der Fehler bei Korrelation der Empfangsbitfolge mit der erwarteten Bitfolge, d.h. der Referenzsequenz, abhängig von der Signalstärke am Funkempfängereingang ist. Dabei ist die Zahl der Fehler als Qualitätsmaß für die Empfangsfeldstärke nutzbar. Die Fehlerzahl ist wiederum abhängig von der Empfindlichkeit des Empfängers und Art und Länge der verwendeten Bitfolge (vorgegebene Bitsequenz, Referenzsequenz).

Das hier vorgestellte Verfahren erlaubt die stromsparende Ermittlung der Position oder Bewegung eines Funkknotens. Das vorgestellte Verfahren kann stromsparend ausgeführt werden, weil keine aufwändigen PLL-Synthesizer-basierten Funkempfänger verwendet werden; dies gilt insbesondere für WLAN- oder Zigbee-Empfänger. Es wird keine aktive Infrastruktur eines drahtlosen Netzwerks (wie z.B. WLAN) benötigt. Es muss kein umfangreiches Berechnungsverfahren wie bei Time-Of-Arrival (TOA bzw. TDOA)-Verfahren erfolgen. Es ist kein aktives, synchronisiertes Funknetzwerk erforderlich.

Das Aussenden der Ortungssequenzen in den Sendern kann für viele (bewegliche) stromsparende Funkempfänger zur gleichen Zeit genutzt werden. Die Belegung des Funkkanals bei der Bestimmung der Ortsinformationen ist sehr niedrig und ist zudem auch für eine große Zahl an sich ortenden Funkempfängern gleich.

Zuordnungen in Räumen oder Geländen mit Genauigkeiten von wenigen Metern sind möglich. Weitere Anwendungen des beschriebenen Verfahrens sind Detektion von sich bewegenden "Fremdobjekten" in einem stromsparenden Sensornetzwerk sowie die Feststellung der "Funk-Abschattungsrichtung" in einem stromsparenden Sensornetzwerk, um neue optimale Routing-Pfade für Multihop-Sensornetzwerke zu finden. Ein Protokollieren der jeweils festgestellten Position in einem Speicher des Funkknotens kann zur Nachverfolgung von Wegen von Funkknoten erfolgen.

Ausführungsbeispiele der Erfindung sind in der Zeichnung dargestellt und werden in der nachfolgenden Beschreibung näher erläutert. Es zeigen:
- Fig. 1: eine schematische Darstellung eines Bei- spiels eines bei der vorliegenden Erfin- dung verwendeten Funksystems
- Fig. 2: eine schematische Darstellung einer Emp- fängerschaltung zur stromsparenden Be- stimmung der Empfangsqualität von Funk- signalen, die bei dem erfindungsgemäßen Verfahren verwendet wird,
- Fig. 3: eine Darstellung der Kreuzkorrelations- funktion, wenn kein Übertragungsfehler auftritt,
- Fig. 4: eine Darstellung der Kreuzkorrelations- funktion, wenn ein Übertragungsfehler auftritt,
- Fig. 5: eine Darstellung von Qualitätsmaßwerten in Abhängigkeit von der Entfernung vom Sender für die verschiedenen Sendeleis- tungen.

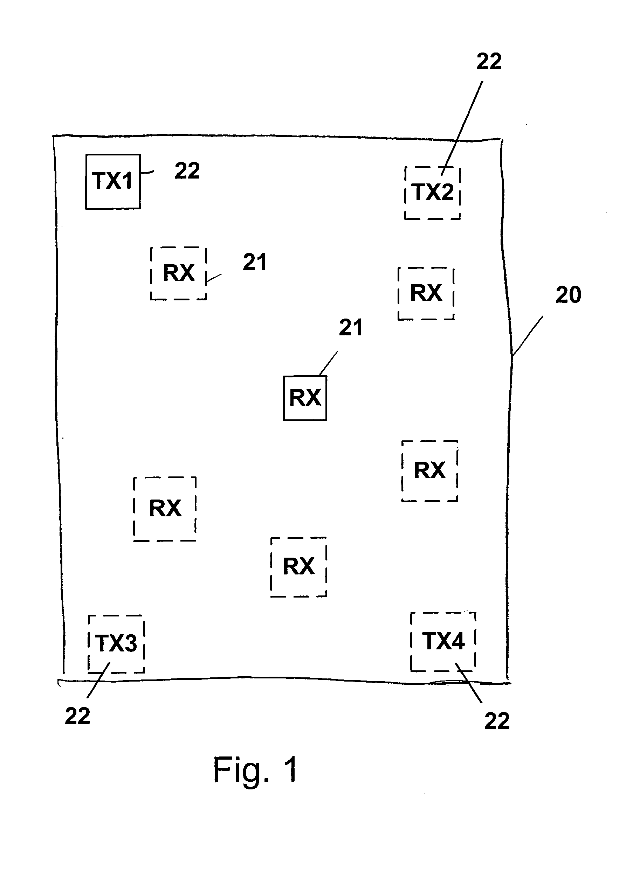

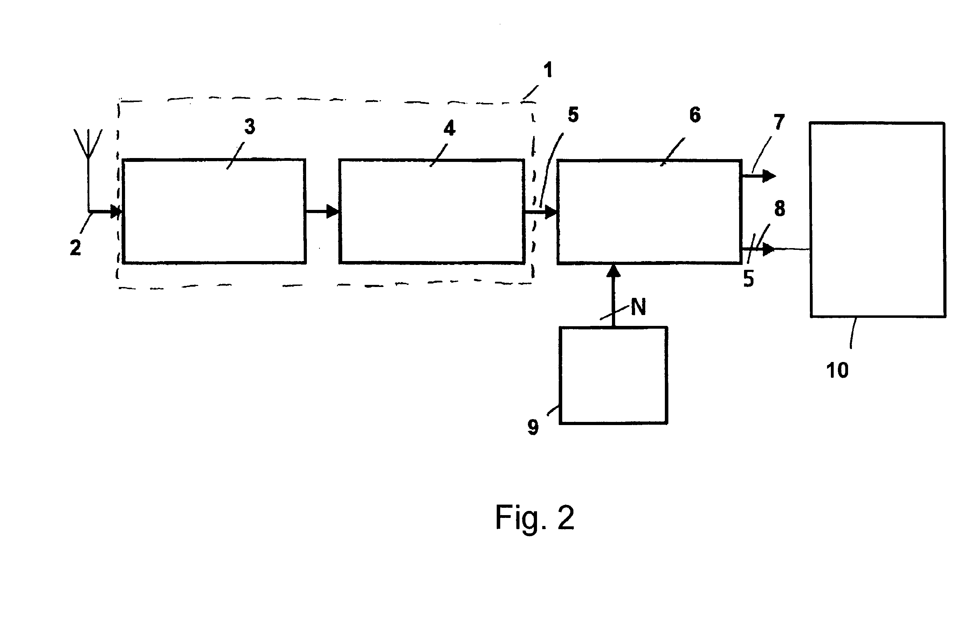

In Fig. 1 ist ein Funksystem innerhalb eines begrenzten Bereichs 20 mit mehreren Funkknoten 21 und mehreren ortsfesten Sendern 22 dargestellt. Die Funkknoten 21 sind beispielsweise mit einem Objekt verbunden und können beweglich sein. Sie weisen jeweils eine stromsparende Empfängerschaltung, wie weiter unten im Zusammenhang mit Fig. 2 beschrieben wird, und üblicherweise auch eine Senderschaltung auf, um Signale an andere Funkknoten oder auch an nicht dargestellte weitere Empfängeranordnungen zu senden.

Das dargestellte System dient dazu, zumindest Bewegungen und Bewegungsrichtungen der Funkknoten 21 zu detektieren, wobei die Beschreibung der Detektion einer Bewegung weiter unten zuerst im Zusammenhang mit einem ortsfesten Sender 22 und einem Funkknoten 21 vorgenommen wird, die beide mit durchgezogenen Linien in der Fig. 1 dargestellt sind.

In Fig. 2 ist schematisch eine Empfängerschaltung dargestellt, wie sie bei einem Funkknoten 21 verwendet wird und die ein stromsparendes Empfängerteil 1 als analoges Frontend aufweist. Das Empfängerteil 1 ist mit einer Antenne 2 verbunden, die von dem Sender 22 gesendete Funksignale als Hochfrequenzsignale (RF-Signale) in Form einer auf ein HF-Trägersignal aufmodulierten vorgegebenen Bitsequenz mit niedriger Bitrate empfängt. Dabei wird eine OOK-Modulation bzw. Amplitudenumtastung verwendet. Das Empfängerteil 1 ist hier schematisch durch einen Hochfrequenzverstärker 3 und einen OOK-Demodulator 4 dargestellt, in denen die empfangenen Signale in eine Empfangsbitfolge (bzw. Empfangssequenz) umgeformt werden, die am Ausgang 5 des Empfängerteils 1 anliegt. Das Empfängerteil 1 zeichnet sich dadurch aus, dass es ein sehr einfach gehaltener Empfänger, d.h. solcher mit geringem Schaltungsaufwand und reduzierter Empfindlichkeit sowie reduzierter Selektivität ist. Durch den Verzicht auf komplexe Schaltungen und aufwendige Modulationstechniken wird der Energieverbrauch des Empfängers reduziert und liegt im Bereich von 5 µA bis weniger als 100 µA. Er lässt sich beispielsweise als Superregenerativ- oder Detektorempfänger realisieren.

Das Empfängerteil 1 ist mit einer Korrelatoreinheit 6 verbunden, die digital oder analog ausgeführt sein kann und beispielsweise Schieberegister und logische Gatter, wie XOR- oder XNOR-Gatter aufweist. Diese Korrelatoreinheit ist gleichfalls stromsparend ausgeführt und verbraucht wenige µA. Eine Speichereinheit 9, die auch Bestandteil der Korrelatoreinheit 6 sein kann, hat eine Referenzsequenz s(t) gespeichert, die zu der vorgegebenen, auf das HF-Trägersignal aufmodulierten Bitsequenz identisch ist. Die Korrelatoreinheit 6 kann gegebenenfalls ein dem Eingangssignal des Empfängerteils 1 entsprechendes Ausgangssignal 7 liefern und erzeugt weiterhin ein Signal 8 für ein Qualitätsmaß QM des Empfangs, d.h. der Empfangsfeldstärke, das dem RSSI-Signal bei konventionellen Funkempfängern entspricht.

Eine solche Empfängerschaltung nach Fig. 1 kann beispielsweise in einem Funkknotennetzwerk als so genannter Aufweck-Empfänger (Wake-up-Empfänger) verwendet werden, der eine spezielle Aktivierungssequenz (vorgegebene Bitsequenz) empfängt und nach Auswertung in dem Empfangsteil 1 und der Korrelatoreinheit 6 das Ausgangssignal 7 an einen oder mehrere Funkknoten des Netzes zu deren Aktivierung sendet, die als stromzehrender Hauptempfänger ausgebildet sind. Dies erlaubt, das Funkknotennetz in einem sehr stromsparenden Modus (z.B. Sleep-Modus) zu betreiben und trotzdem bei Bedarf zu aktivieren. Die Qualitätsmaß-Werte der Funkknoten erlauben beispielsweise im Sensornetzwerk bzw. Funkknotennetzwerk Rückschlüsse auf die lokalen Empfangsbedingungen und können zur Ermittlung optimaler Routing-Pfade bei Multihop-Netzwerken herangezogen werden. Naheliegend ist eine Leistungsregelung bei sendenden Funkknoten zum Zwecke der Erhöhung der Betriebsdauer. Im erfindungsgemäßen Verfahren bzw. bei der erfindungsgemäßen Funkeinrichtung nach Fig. 1 werden die Werte des Qualitätsmaßes zusätzlich oder allein zur Abschätzung einer Bewegung und einer Bewegungsrichtung bzw. zur Feststellung einer Position eines Funkknotens verwendet, wie weiter unten erläutert wird.

Es soll zuerst die Bestimmung des Qualitätsmaßes beschrieben werden.

In der Korrelatoreinheit 6 wird eine Korrelationsfunktion aus der Empfangsbitfolge bzw. -sequenz 5, die als Empfangssignal e(t) bezeichnet wird, und der in der Speichereinheit 9 gespeicherten und vorprogrammierten Referenzsequenz s(t) gebildet. Vorzugsweise wird eine Kreuzkorrelationsfunktion KKF als k(t) gebildet. Bei ungestörtem Empfang ist das Empfangssignal e(t) gleich s(t), der Referenzsequenz, d.h. s(t) wird mit sich selbst korreliert. In diesem Idealfall ist die ermittelte KKF gleich der Autokorrelationsfunktion AKF, die direkt mit der vorgegebenen Bitsequenz bzw. der Referenzsequenz festgelegt ist und vorab ermittelt werden kann.

Um eine Zahl der Fehler, die für die Bestimmung des Qualitätsmaßes für die Empfangsfeldstärke genutzt werden kann und soll, definieren zu können, ist es wichtig, dass die vorgegebene Bitsequenz geeignet gewählt wird. Eine Bitsequenz s(t) ist dann geeignet, wenn sie für die Autokorrelationsfunktion ein ausgeprägtes Maximum aufweist. Weiterhin soll bei dieser AKF ein großer Abstand zum Nebenmaximum oder zu den Nebenmaxima gegeben sein, wobei beide angeführten Eigenschaften auch bei gestörtem Empfang erhalten bleiben müssen. Beispielsweise soll der Abstand so hoch sein, dass das Maximum um mehrere Qualitätsmaß-Einheiten über den Nebenmaxima bzw. über den Nebenmaxima-"Teppich" liegt, so dass die Form der Kreuzkorrelationsfunktin KKF auch bei gestörter Übertragung erhalten bleibt. Weiterhin muss das Maximum "ortsfest" bezogen auf die zeitliche Lage in der KKF sein, d.h. es darf nicht wandern, wenn Störungen mitempfangen werden. Als Bitsequenz s(t) und e(t) können binäre Sequenzen verwendet werden, wobei dann die Kreuzkorrelationsfunktion k(t) nicht binär ist.

Eine geeignete Bitsequenz ist beispielsweise eine solche, bei der eine sehr gute Kreuzkorrelationsfunktion gebildet wird, beispielsweise 00111111191111111100, hier wäre der Abstand zum Nebenmaximum 8. Mit zwei Fehlern gestört könnte die Kreuzkorrelationsfunktion dann so aussehen: 00111112373211111100. Hier beträgt der Abstand zum Nebenmaximum noch 4.

Da die detektierbare Fehlerzahl auch abhängig von der Länge der verwendeten Bitsequenz ist, ist es sinnvoll, diese möglichst lang zu wählen. Praktisch ist eine Länge der Sequenz ab 8 Bit sinnvoll, dann können Fehler beim Empfang toleriert werden. Wird eine 31-Bit-Sequenz verwendet, die die oben genannten Kriterien erfüllt, so können bis zu neun beliebige Übertragungsfehler toleriert werden, wobei noch das Maximum der Kreuzkorrelationsfunktion an derselben Stelle ausgeprägt ist und noch ein Abstand zum Nebenmaximum feststellbar ist.

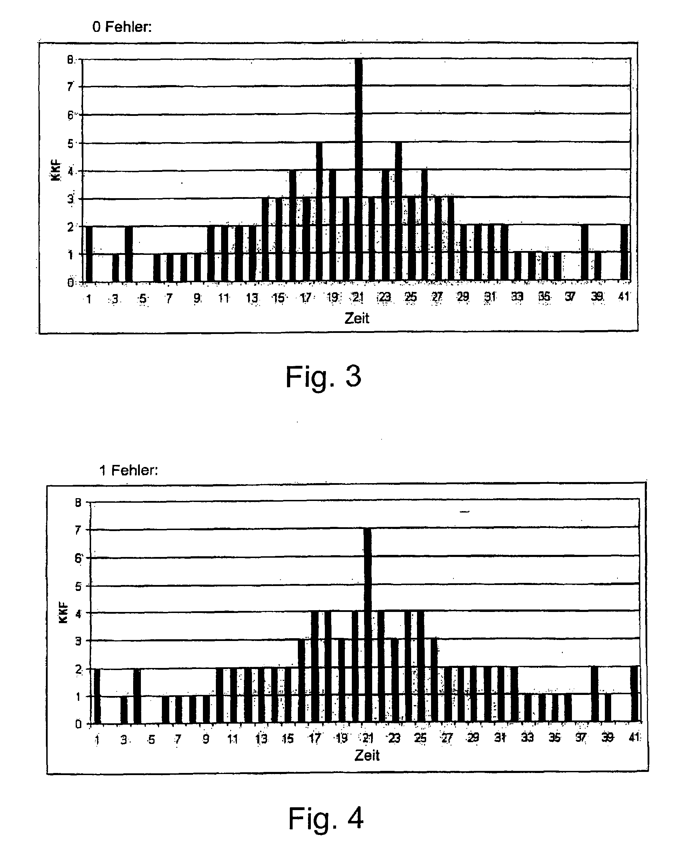

In den Fign. 3 und 4 ist die Kreuzkorrelationsfunktion e(t) der Empfangsbitfolge 5, z.B. 10110111 mit der Referenzsequenz ohne Übertragungsfehler und einer unterschiedlichen Zahl von Übertragungsfehlern dargestellt, wobei die Ordinate die Signalqualität und die Abszisse die Zeit darstellt. Wie aus Fig. 3 zu erkennen ist, weist die Kreuzkorrelationsfunktion, die ohne Übertragungsfehler gleichzeitig die Autokorrelationsfunktion ist, ein ausgeprägtes Maximum mit einer Höhe von acht auf und der Abstand zu dem Nebenmaximum beträgt drei. Für das Qualitätsmaß, das als Signal 8 am Ausgang der Korrelationseinheit 6 ansteht, kann die Höhe des Korrelationsmaximums, hier acht, in Verbindung mit dem Abstand zum Nebenmaximum, hier drei, verwendet werden. Wird nur die Höhe des Korrelationsmaximums gewählt, so sollte diese auf den bestmöglichen Wert bezogen werden.

Fig. 4 zeigt beispielhaft die Kreuzkorrelationsfunktion bei einem Übertragungsfehler, wobei erkennbar ist, dass das Hauptmaximum noch sehr ausgeprägt ist und der Abstand zum Nebenmaximum noch groß ist. Jeder hinzukommende Fehler führt zu einer Absenkung des Maximums in der Kreuzkorrelationsfunktion und zu einer Verringerung des Abstands zum Nebenmaximum. Wenn zu viele Fehler beim Empfang auftreten, dann verschwindet die Maximumsausprägung in der KKF, z.B. bei zu niedrigem Empfangspegel.

Die beschriebene stromsparende Ermittlung der Signalqualität bzw. der Empfangsfeldstärke des empfangenen Hochfrequenzsignals kann zur Schätzung der Entfernung der Empfängerschaltung (Funkknoten 21) vom Sender 22 und damit zur Ermittlung ihrer Bewegung dienen.

Dazu sendet der Sender 22 seine Funksignale, d.h., die auf den hochfrequenten Träger vorzugsweise mit dem OOK-Verfahren aufmodulierte vorgegebene Bitsequenz mit unterschiedlichen Sendeleistungen, beispielsweise drei unterschiedlichen Sendeleistungen in vorgegebenen Zeitintervallen aus und der Funkknoten mit stromsparendem Empfänger empfängt die Funksignale mit unterschiedlichen Empfangsfeldstärken. In der Korrelatoreinheit 6 werden Werte für die Qualitätsmaße bei den unterschiedlichen Sendeleistungen bestimmt und einer Auswerteeinrichtung 10 zugeführt, die Bestandteil der Empfängerschaltung sein kann, aber auch unabhängig von dem Funkknoten an anderer Stelle vorgesehen sein kann, wobei dann die Signale 8 für die Qualitätsmaße über Funk übertragen werden. Vorzugsweise ist die Empfängerschaltung bei einem Funksystem, das beispielsweise zur Diebstahlüberwachung dient, ständig eingeschaltet, sie kann jedoch auch auf die zeitliche Abfolge des Aussendens der Funksignale mit abgestufter Sendeleistung angepasst sein.

Durch die Abstufung der Sendeleistung kann die Spannweite der Qualitätsmaße erweitert werden. Wenn beispielsweise die Anordnung nach Fig. 1 auf einem freien Feld ohne Abschattungen aufgebaut würde, so wäre der Empfang so gut, dass sich das Qualitätsmaß erst für genügend hohen Abstand des Funkknotens bzw. Empfängers 21 vom Sender 22 verändert, z.B. erst ab 50 m. Wird nun die Sendeleistung beispielsweise um den Faktor 10 verringert, wird "künstlich" ein schlechterer Empfang provoziert, damit das dann festgestellte Qualitätsmaß bereits für kleinere Abstände des Empfängers 21 vom Sender 22 seinen Wert verändert, z.B. schon ab 16 m. Wird eine weitere Abstufung der Sendeleistung vorgenommen, beispielsweise noch einmal um eine Zehnerpotenz, dann ist eine Veränderung des Qualitätsmaßes nochmals für kleinere Abstände, z.B. ab 5 m, erkennbar. Durch Wählen der Anzahl der Sendeleistungen entsprechenden einer sukzessiven Degradation können auch geringere Abstände vom Sender mit den Qualitätsmaß-Werten geschätzt werden.

Als Beispiel wird folgender Fall gewählt: Es werden drei Sequenzen über die Funksignale ausgesandt und zwar mit einer Leistung von:
Leistung 1: 10 mW
Leistung 2: 1 mW und
Leistung 3: 0,1 mW.

Der Empfang durch den Empfänger 21 in seiner korrekten Stellung führt zu Qualitätsmaßen:
QM1: 31
QM2: 26 und
QM3: 21.

Entfernt sich nun der Empfänger 21 vom Sender 22, so ändern sich die Werte der Qualitätsmaße zu:
QM1: 31
QM2: 25 und
QM3: 10.

Die Auswertung der Qualitätsmaße wird nun in der Auswerteeinheit 10 vorgenommen, wobei unterschiedliche Verfahren vorstellbar sind. In einer einfachsten Form können die Werte einer Folge von Funksignalen mit unterschiedlichen Sendeleistungen in der Auswerteeinheit 10 als Maß für die Entfernung zwischen Sender und Empfänger addiert werden. Die jeweilige Bestimmung einer solchen Summe über einen größeren Zeitraum und Vergleich der jeweiligen Summen lässt den Schluss auf eine Änderung des Ortes d.h. auf eine Bewegung zu, wenn der Summenwert zum vorherigen eine signifikante Abweichung zeigt. Je nach Wahl der Sendeleistungsabstufungen kann auch eine Addition mit verschieden gewichteten QM-Werten stattfinden. Die Art der Auswertung muss anhand der Abstufung der Sendeleistung in Verbindung mit der verwendeten vorgegebenen Bitsequenz fein eingestellt werden und auch die Anzahl der Abstufungen der Sendeleistungen muss in Zusammenhang mit dem verwendeten Empfänger, insbesondere seiner Empfindlichkeit und der verwendeten vorgegebenen Bitsequenz, insbesondere seiner Codelänge, berücksichtigt werden

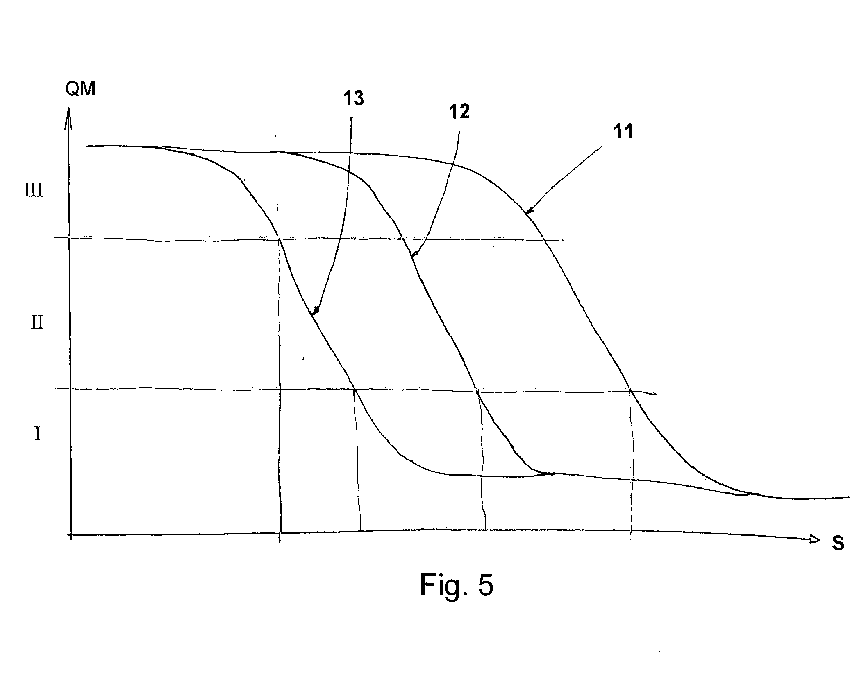

In Fig. 5 sind QM-Werte in Abhängigkeit von der Entfernung von dem Sender dargestellt, wobei die Kurve 11 die QM-Werte für die höchste Leistungsstufe zeigt, die Kurve 12 diejenigen der um eine Größenordnung reduzierte Leistungsstufe und die Kurve 13 diejenigen für eine nochmals um eine Zehnerpotenz reduzierte Leistungsstufe. Wird davon ausgegangen, dass mit einer einzigen Kurve 11, 12, 13 von QM-Werten drei verschiedene Abstandsbereiche bzw. Abstandsklassen I, II, III, so sind mit den in Fig. 5 dargestellten Möglichkeiten, d.h. mit einem Sender mit drei Sendeleistungsstufen und einem Empfänger eine Schätzung bis zu neun Abstandsklassen abhängig von der Überlappung der Kurven möglich. Wie ausgeführt, muss die Abstufung der Sendeleistungen geeignet gewählt werden. Sind die Sendeleistungen nicht weit genug auseinander, z.B. 2:1, gewählt, so kann eine Überlappung bei den QMversus-Abstand- Kennlinien auftreten. Sind die Sendeleistungen zu weit auseinander gewählt, z.B. 100:1, so sind Lücken bei der Zuordnung von QM-Werten zu Abständen möglich. Sind die verwendeten Codes Länger, können mehr Übertragungsfehler pro Aussendung toleriert werden, d.h. der nutzbare QM-Wertebereich vergrößert sich. Damit kann eine feinere QM-zu-Abstand-Zuordnung erfolgen.

Die obige Beschreibung wurde entsprechend Fig. 1 mit einem Sender 22 und einem Empfänger 21 vorgenommen und tatsächlich sind üblicherweise mehrere Sender vorgesehen, in Fig. 1 sind vier Sender 22 (TX1, TX2; TX3, TX4) angezeigt und beispielsweise sechs Empfänger 21, wobei jedoch noch sehr viel mehr geplant sein können. In einem solchen Fall wird jedem Sender 22 eine Senderkennung, beispielsweise eine Kennung mit 8 bis 16 Bit zugeordnet und die vorgegebene lange Bitsequenz als Ortungssequenz, z.B. mit 31 Bit kann allen Sendern 22 gemeinsam sein. Die Sender 22 senden dann zyklisch, z.B. im Minutentakt oder zu unregelmäßigen Zeitpunkten bei Bedarf bzw. auf Wunsch des Anwenders. Wird eine Bewegung detektiert, ist es in vielen Fällen sinnvoll die Sendeperiode der Sender 22 zu verkürzen (z.B. von 15 Minuten auf 1 Minute). Dies kann von den entsprechenden Funkknoten mitgeteilt bzw. veranlasst werden. In dem festgelegten Takt werden die OOK-modulierten Trägersignale mit jeweils unterschiedlichen Sendeleistungen nacheinander ausgesendet und die Empfänger 21 empfangen von allen Sendern 22 die Funksignale und werten sie jeweils zur Bildung von Qualitätsmaßen, d.h. von Werten der Qualitätsmaße, aus.

Im Folgenden wird ein Beispiel anhand von vier Sendern 22, nämlich TX1, TX2, TX3, TX4, in Bezug auf einen Empfänger bzw. Funkknoten 21 gegeben. Von den vier Sendern 22 an vier verschiedenen Orten werden sequenziell die vorgegebene Bitfolge d.h. die Korrelationsfolge mit der Senderkennungsbitfolge zu fünf verschiedenen Zeitpunkten t1, t2, t3, t4, t5 mit drei verschiedenen Sendeleistungen ausgesendet, von dem Funkknoten 21 empfangen und hinsichtlich der QM-Werte ausgewertet. Zur Auswertung werden die Qualitätsmaß-werte bei verschiedenen Sendeleistungen für jede Aussendung t1-t5 jeweils summiert und als QMTX1 bis QMTX4 z.B. in einem RAM abgelegt, wobei diese Werte dann zur Detektion von Bewegungen unter Berücksichtigung ihrer signifikanten zeitlichen Änderungen herangezogen werden.
Beispiel:

| | QM TX 1 | QM TX 2 | QM TX 3 | QM TX 4 |
|---|---|---|---|---|
| Aussendung t1: | 8 | 2 | 0 | 2 |
| Aussendung t2: | 2 | 0 | 7 | 2 |
| Aussendung t3: | 1 | 1 | 6 | 2 |
| Aussendung t4: | 8 | 0 | 1 | 2 |
| Aussendung t5: | 3 | 0 | 1 | 2 |

Jeder QM-Wert kann hier beispielsweise die Werte 0..8 annehmen.

Von Aussendung t1 zu Aussendung t2 ist eine Entfernung längs des Ausbreitungspfades von Sender TX1 aus und eine Annäherung an Sender TX3 erkennbar. Von Aussendung t2 zu Aussendung t3 ist die QM-Veränderung möglicherweise zu gering und kann gegebenenfalls ignoriert werden.

Wird demnach die Differenz zu einem QM-Vorgängerwert QMTX1t2 - QMTX1t1 = 2 - 8 = 6 berechnet und eine Sicherheitsschwelle angefügt, z.B. erst ab Differenzen größer 2, so kann auf Bewegung geschlossen werden. Differenzbildung ist als Digitalschaltung mit sehr geringem Aufwand und stromsparend implementierbar. Würde man etwas aufwändigere Berechnungen z.B. mit Quadratwurzeln ausführen wollen, so kann dies in einer entsprechenden Wertetabelle abgelegt und auf einen Wurzelalgorithmus verzichtet werden. Diese Wertetabelle kann als Digitalschaltung mit entsprechenden Minimierungen kombinatorisch und stromsparend ausgeführt werden.

Bestimmung der Bewegungsrichtung: Im Falle von Aussendung t1 bis Aussendung t4 kann geschlossen werden, dass eine Entfernung von Sender TX1 bei gleichzeitiger Annäherung an Sender TX3 und dann wieder ein Zurückkehren zu Sender TX1 erfolgt ist. Der Sender TX4 zeigt keine signifikanten Änderungen. Bei genügend großen Änderungen eines oder mehrerer QM-Werte kann somit auf die Richtung geschlossen werden.

Bei einer solchen Überwachungsanlage, wie sie in Fig. 1 dargestellt ist, ist es dann sinnvoll, dass eine zentrale Auswerteeinheit 10 vorgesehen ist, die von allen Empfängern 21 die Werte der Qualitätsmaße beispielsweise über eine Funkübertragung sammelt und die Auswertung hinsichtlich der möglichen Bewegung, der Richtung der Bewegung und gegebenenfalls der relativen Position vornimmt und im Ereignisfall eine entsprechende Meldung weiterleitet.

Die zentrale Auswerteeinheit bietet auch die Möglichkeit, die in jedem Funkknoten 21 gesammelten QM-Werte gelegentlich auszulesen. Dies ermöglicht eine Nachverfolgung. Stark vereinfacht wird das Auslesen, wenn die Historie der jeweiligen QM-Werte nur im Fall einer detektierten Bewegung übermittelt wird. Wird keine Bewegung detektiert, so genügt zur zentralen Erfassung ein einzelner, statistischer Wert. Grundsätzlich kann aber jeder Funkknoten 21 selbst in der Lage sein, Bewegung und Bewegungsrichtung zu detektieren und in Verbindung mit einem auf dem Funkknoten 21 befindlichen Sender das bestehende Funknetzwerk aufzuwecken und eine zentrale Erfassung zu veranlassen.

Eine weitere Möglichkeit bei der vorgestellten Überwachung nach Fig. 1 kann darin liegen, dass Fremdobjekte, die sich innerhalb des abgegrenzten Bereichs 20 befinden, detektiert werden können, wobei allerdings die zeitliche Historie verwendet werden muss, d.h. alle Werte der Qualitätsmaße aller Empfänger müssen gespeichert werden, damit aufgrund der konkreten Änderung der Qualitätsmaße in Bezug auf jeweils die einzelnen Sender und zeitabhängig auf ein Fremdobjekt geschlossen werden kann. Für diese Art der Überwachung ist jedoch eine größere Anzahl an Sendern 22 erforderlich als die in Fig.1 gezeigten, damit unterschieden werden kann, ob tatsächlich eine Entfernung von Funkknoten 21 zu Sendern 22 erfolgt oder ob in einem Ausbreitungspfad eine Abschattung durch ein Fremdobjekt gegeben ist.

## Patentansprüche

1. Verfahren zur Detektion einer Bewegung mindestens eines Empfängers, bei dem Funksignale von mindestens einem ortsfesten Sender an den mindestens einen Empfänger gesendet und die empfangenen Signale zur Feststellung einer Bewegung ausgewertet werden, wobei die Funksignale als eine auf einen hochfrequenten Träger aufmodulierte vorgegebene Bitsequenz ausgebildet sind und von dem Empfänger zur Bildung einer Empfangssequenz demoduliert werden, die zur Bestimmung von Übereinstimmungen mit der als Referenzsequenz gespeicherten vorgegebenen Bitsequenzen korreliert wird, wobei abhängig von durch die Korrelation feststellbaren Übereinstimmungen oder Fehlern Qualitätsmaße für die Empfangsfeldstärke der empfangenen Funksignale bestimmt werden, wobei die Funksignale mit vorgegebener Bitsequenz von dem Sender mit mindestens zwei unterschiedlichen Sendeleistungen in einer Folge gesendet werden und die Folge in zeitlichen Abständen wiederholt wird und die Qualitätsmaße der Empfangssequenzen der Folgen zur Feststellung einer Bewegung des Empfängers in Bezug auf den Sender ausgewertet werden.

2. Verfahren nach Anspruch 1, **dadurch gekennzeichnet, dass** die Anzahl der unterschiedlichen Sendeleistungen und/oder ihre Abstufungen zueinander abhängig von Entfernungsbereichen gewählt werden, innerhalb denen eine Bewegung detektiert werden soll.

3. Verfahren nach Anspruch 1 oder 2, **dadurch gekennzeichnet, dass** mindestens drei Sender vorgesehen werden, denen jeweils ein Senderkennung zugeordnet wird, die jeweils mit der vorgegebenen Bitsequenz gesendet wird, wobei die vorgegebene Bitsequenz für alle Sender gleich oder für jeden Sender unterschiedlich ist.

4. Verfahren nach einem der Ansprüche 1 bis 3, **dadurch gekennzeichnet, dass** die Qualitätsmaße der Empfangssequenzen aus den Funksignalen einer Folge des mindestens eines Senders mit unterschiedlichen Sendeleistungen addiert und als Hinweis für die Bewegung des Empfängers in Bezug auf den Sender verwendet werden.

5. Verfahren nach Anspruch 4, **dadurch gekennzeichnet, dass** abhängig von den Qualitätsmaßen der mindestens drei Sender die Richtung der Bewegung bestimmt wird.

6. Verfahren nach einem der Ansprüche 1 bis 5, **dadurch gekennzeichnet, dass** für die vorgegebene Bitsequenz eine Binärsequenz verwendet wird.

7. Verfahren nach einem der Ansprüche 1 bis 6, **dadurch gekennzeichnet, dass** die vorgegebene Bitsequenz so gewählt wird, dass für die Autokorrelationsfunktion sich ein ausgeprägtes Maximum mit großem Abstand zu einem oder mehreren Nebenmaxima ergibt und das Maximum auch bei Störungen ortsfest ist.

8. Verfahren nach Anspruch 7, **dadurch gekennzeichnet, dass** als Qualitätsmaß die Höhe des Korrelationsmaximums über einem Mindestwert oder die Höhe des Korrelationsmaximums in Verbindung mit Abstand zu einem Nebenmaximum gewählt wird gewählt wird.

9. Verfahren nach einem der Ansprüche 1 bis 8, **dadurch gekennzeichnet, dass** die Empfangssequenz mit der Referenzsequenz nach einer Kreuzkorrelationsfunktion korreliert wird.

10. Verfahren nach einem der Ansprüche 1 bis 9, **dadurch gekennzeichnet, dass** die Funksignale entsprechend dem On-Off-Keying oder anderer mehrwertiger Amplitudenmodulationen moduliert sind.

11. Verfahren nach einem der Ansprüche 1 bis 10, **dadurch gekennzeichnet, dass** durch zeitliches Auswerten der Qualitätsmaße der Folgen gesendeter Funksignale Funkabschattungen detektiert werden.

12. Funkeinrichtung zur Detektion einer Bewegung mit mindestens einem stromsparenden analogen Empfänger, mindestens einem ortsfesten Sender zum Senden von Funksignalen, die als eine auf einen hochfrequenten Träger aufmodulierte vorgegebene Bitsequenz ausgebildet sind, an den mindestens einen Empfänger zur Bildung einer Empfangssequenz aus den demodulierten Funksignalen und mit einer stromsparenden Auswertevorrichtung, die mindestens eine Korrelatoreinheit (6) und eine Speichereinheit (9) zum Speichern der vorgegebenen Bitsequenz als Referenzsequenz umfasst und die Korrelatoreinheit (6) ausgebildet ist, die Empfangssequenz mit der Referenzsequenz zu korrelieren und abhängig von einer durch die Korrelation feststellbaren Übereinstimmung oder Fehlern ein Qualitätsmaßsignal für die Empfangsfeldstärke am Empfänger (1) zu bestimmen, wobei der mindestens eine Sender ausgebildet ist, die Funksignale mit vorgegebener Bitsequenz mit mindestens zwei unterschiedlichen Sendeleistungen in einer Folge zusenden und die Folge in zeitlichen Abständen zu wiederholen und die Auswertevorrichtung ausgebildet ist, die Qualitätsmaße der Empfangssequenzen der Folgen zur Feststellung einer Bewegung des Empfängers in Bezug auf den Sender auszuwerten.

13. Einrichtung nach Anspruch 12, **dadurch gekennzeichnet, dass** die Autokorrelationsfunktion der Referenzsequenz und somit die vorgegebene Bitsequenz ein ausgeprägtes Maximum mit großem Abstand zu einem oder mehreren Nebenmaxima aufweist und das Maximum auch bei Störungen ortsfest ist.

14. Einrichtung nach Anspruch 12 oder 13, **dadurch gekennzeichnet, dass** die Korrelatoreinheit (6) ausgebildet ist, als Qualitätsmaß der Abstand des Korrelationsmaximums zu einem vorgegebenen Wert, vorzugsweise zum maximal möglichen Wert des Korrelationsmaximums zu bestimmen und/oder die Höhe des Korrelationsmaximums in Verbindung mit dem Abstand zu einem Nebenmaximum zu bestimmen.

15. Einrichtung nach einem der Ansprüche 12 bis 15, **dadurch gekennzeichnet, dass** die Korrelatoreinheit (6) ausgebildet ist, eine Kreuzkorrelationsfunktion aus Empfangssequenz (5) und Referenzsequenz zu bilden.

16. Einrichtung nach einem der Ansprüche 13 bis 15, **dadurch gekennzeichnet, dass** der Empfänger einen stromsparenden Demodulator (4) aufweist, der als ein OOK-Demodulator oder ein M-ASK-Demodulator ausgebildet ist.
